(19) Europäisches Patentamt
European Patent Office
Office européen des brevets

(11) **EP 3 861 895 B1**

(12) **EUROPEAN PATENT SPECIFICATION**

(45) Date of publication and mention
of the grant of the patent:
**24.04.2024 Bulletin 2024/17**

(21) Application number: **21155863.0**

(22) Date of filing: **08.02.2021**

(51) International Patent Classification (IPC):
*A47J 31/00* (2006.01)     *A47J 31/46* (2006.01)
*A47J 31/52* (2006.01)     *A47J 31/58* (2006.01)
*B64D 11/00* (2006.01)     *B64D 11/04* (2006.01)

(52) Cooperative Patent Classification (CPC):
**A47J 31/58; A47J 31/005; A47J 31/469;
A47J 31/5255; B64D 11/0007;** B64D 11/04

(54) **DIFFERENTIAL PRESSURE FLOW METER FOR BEVERAGE MAKER**

DIFFERENZDRUCKDURCHFLUSSMESSER FÜR GETRÄNKEBEREITER

DÉBITMÈTRE À PRESSION DIFFÉRENTIELLE POUR APPAREIL DE PRÉPARATION DE BOISSONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.02.2020 US 202016784922**

(43) Date of publication of application:
**11.08.2021 Bulletin 2021/32**

(73) Proprietor: **B/E Aerospace, Inc.
Winston Salem, NC 27105 (US)**

(72) Inventors:
• **HERRMANN, Justin D.
Lenexa, KS Kansas 66215 (US)**
• **BEARD, John H.
Olathe, KS Kansas 66062 (US)**

(74) Representative: **Dehns
St. Bride's House
10 Salisbury Square
London EC4Y 8JD (GB)**

(56) References cited:
**EP-A1- 1 759 617     US-A1- 2011 061 542
US-A1- 2015 013 546**

• **Anonymous: "Flow measurement - Wikipedia", ,
2 May 2019 (2019-05-02), XP055806230, Retrieved
from the Internet:
URL:https://web.archive.org/web/2019050221
2410/https://en.wikipedia.org/wiki/Flow_me
asurement [retrieved on 2021-05-20]**

**Description**

BACKGROUND

Aircraft beverage maker devices can brew coffee or tea or provide hot water via an exterior faucet. Said devices are connected to an aircraft potable water supply and may be at risk of overflow, e.g., due to software or electrical sensor malfunctions. For example, software or sensor failures may cause the solenoids controlling the dispensation of water to remain open indefinitely, leading to overflow of the platen drain system. Beverage maker devices are disclosed in EP 1759617, US 2011/061542, US 2015/013546 and at https:/web.archive.org/web/20190502212410/https://en.wikipedia.org/wiki/Flow_measur ement .

SUMMARY

A beverage maker device is provided as defined by claim 1.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:

FIG. 1 is a forward view of a beverage maker device according to example embodiments of this disclosure;

FIG. 2A is a partial cutaway view of the beverage maker device of FIG. 1;

FIGS. 2B and 2C are diagrammatic illustrations of the beverage maker device of FIG. 1;

FIGS. 3A through 3D are schematic diagrams of an overflow mitigation circuit of the beverage maker device of FIG. 1;

FIG. 4A is a diagrammatic illustration of a beverage maker device according to example embodiments of this disclosure;

FIG. 4B is a partial cross-sectional view of a differential-pressure flow meter of the beverage maker device of FIG. 4A;

FIG. 5 is a diagrammatic illustration of the differential-pressure flow meter and control circuitry of the beverage maker device of FIG. 4A;

and FIG. 6 is a two-dimensional plot of operations of the differential-pressure flow meter of FIG. 4B.

DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure, as long as they fall within the scope of the appended claims.

Broadly speaking, embodiments of the inventive concepts disclosed herein are directed to overflow mitigation and flow monitoring systems for a beverage maker device (e.g., a device installable in an aircraft galley for brewing or dispensing coffee, tea, and/or hot water). The overflow mitigation system monitors flow pressure through the device and can prevent overflow at any angle by tracking the flow volume based on flow pressure, preventing overflow even in the event of software or sensor failure.

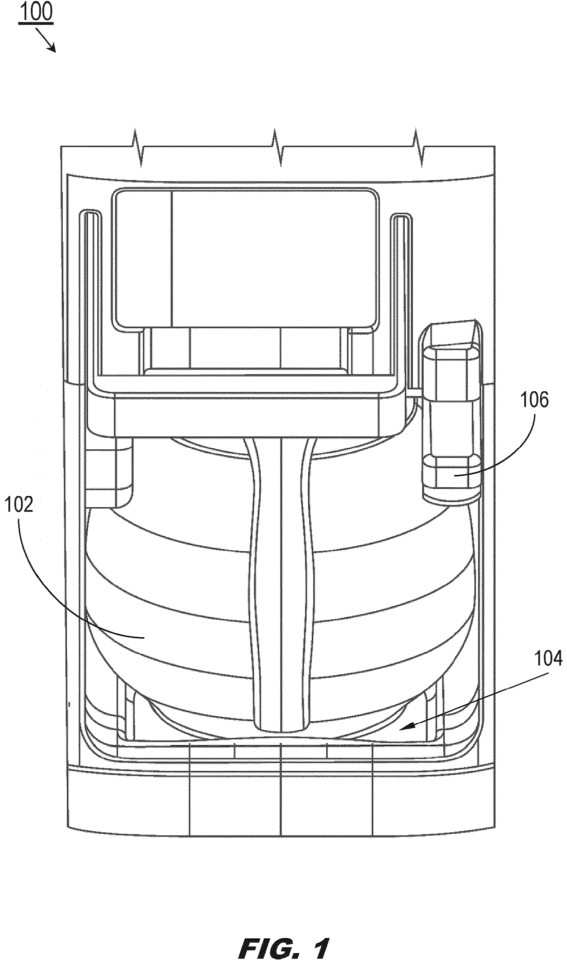

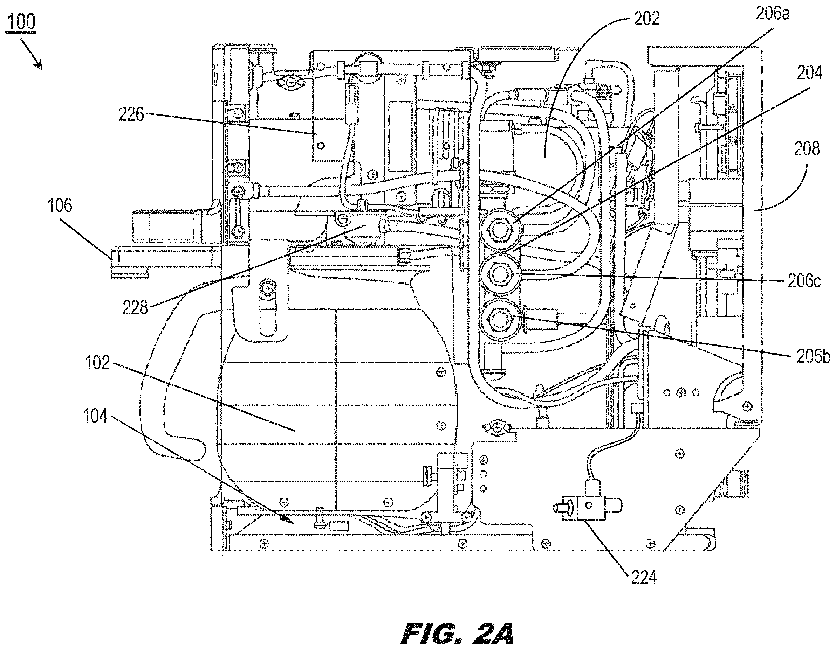

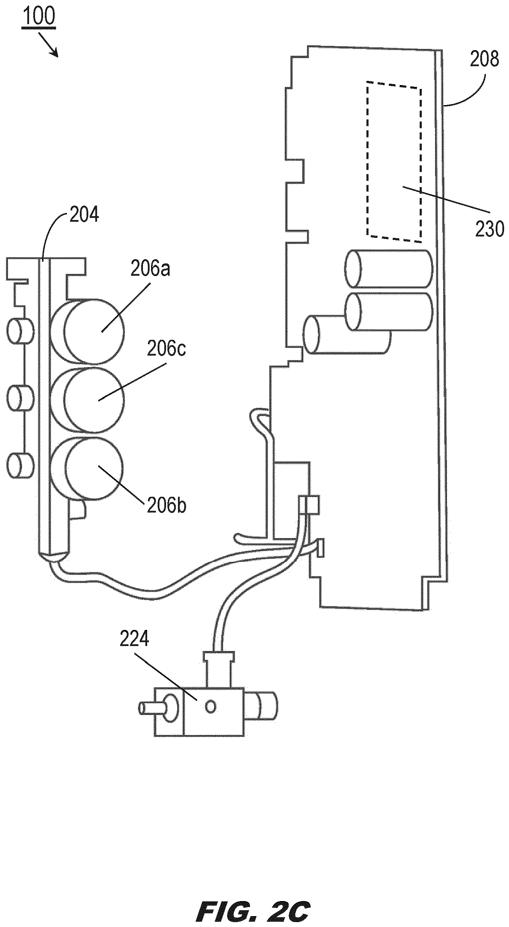

FIGS. 1 and 2A through 2C-BEVERAGE MAKER GENERALLY

Referring to FIG. 1, a beverage maker device 100 is disclosed. The beverage maker device 100 may include a server 102 insertable in a platen 104 and an external faucet 106.

In embodiments, the beverage maker device 100 may be installable in a standardsize galley insert (GAIN) niche of an aircraft galley structure or monument, connectible to an onboard water supply, power supply, and aircraft network via a GAIN interface (not shown). For example, the beverage maker device 100 may receive operating power and potable water, or provide the aircraft network with usage and diagnostic data. Hot water may be dispensed into the server 102, e.g., for brewing tea or coffee, or dispensed directly into a cup or other container via the external faucet 106.

Referring also to FIGS. 2A through 2C, the beverage maker device 100 may include a hot water tank 202, a manifold 204, solenoid valves 206a-c, a process control board 208 (PCB), tank heaters 210, a platen heater 212, a server level sensor 214, a platen drain 216, a human/machine interface 218 (HMI), an external drain 220, an inlet body 222, and a pressure transducer 224.

The hot water tank 202 may be plumbed to the manifold 204 for dispensing hot water from the hot water tank, e.g., for the brewing of coffee (via brew head 226) to an external brew cup (via the solenoid valve 206a), for the brewing of tea (via tea tube funnel 228 and the solenoid valve 206b), or for the dispensing of hot water through the external faucet 106 (via the solenoid valve 206c). Water dispensed by the beverage maker device 100 may be heated by tank heaters 210 within the hot water tank 202 and kept warm by the platen heater 212 within the platen 104 (e.g., directly underneath and in contact with the server 102 when the server is present). The hot water tank 202 may include an external drain 220; further, the platen 104 may be plumbed to the platen drain 216, allowing any spillage within the platen to flow to an aircraft wastewater system.

In embodiments, the PCB 208 may house an overflow mitigation circuit 230 connecting the pressure transducer 224 to the solenoid valves 206a-b on the manifold 204. The PCB 208 may be supplied with input power (232) from an aircraft-based power system (e.g., via a galley insert (GAIN) interface by which the beverage maker device 100 is connected to aircraft power supplies and networks). The PCB 208 may additionally house onboard control processors 208a and memory 234 capable of storing encoded instructions executable by the control processors as well as the overflow mitigation circuit 230 and other control circuitry on the PCB.

In embodiments, the pressure transducer 224 may sense the pressure of the flow of water through the inlet body 222 into the hot water tank 202, enabling the overflow mitigation circuit 230 to allow no more than a predetermined volume of water to be dispensed (e.g., into the server 102). For example, the sensed pressure data may be in the form of a signal to the overflow mitigation circuit 230 on the PCB 208. Based on the received pressure data, the overflow mitigation circuit 230 may determine if the volume of water dispensed (e.g., during a given catering cycle of the beverage maker device 100) has reached the predetermined threshold. For example, the flow threshold may be set to 1.5 liters, or the internal volume of the server 102, to prevent overflow. In some embodiments, the flow threshold may be reduced or otherwise adjusted by the control processors 208a, either manually (e.g., based on control input submitted by an operator via the HMI 218) or automatically, e.g., when the aircraft-based water supply feeding the inlet body 222 and the hot water tank 202 is experiencing low water levels.

In embodiments, if the overflow mitigation circuit 230 indicates that the predetermined volume threshold is reached while the beverage maker device 100 is still dispensing, the overflow mitigation circuit 230 may close the corresponding solenoid valve 206a-b, preventing further dispensation of hot water until the next catering cycle.

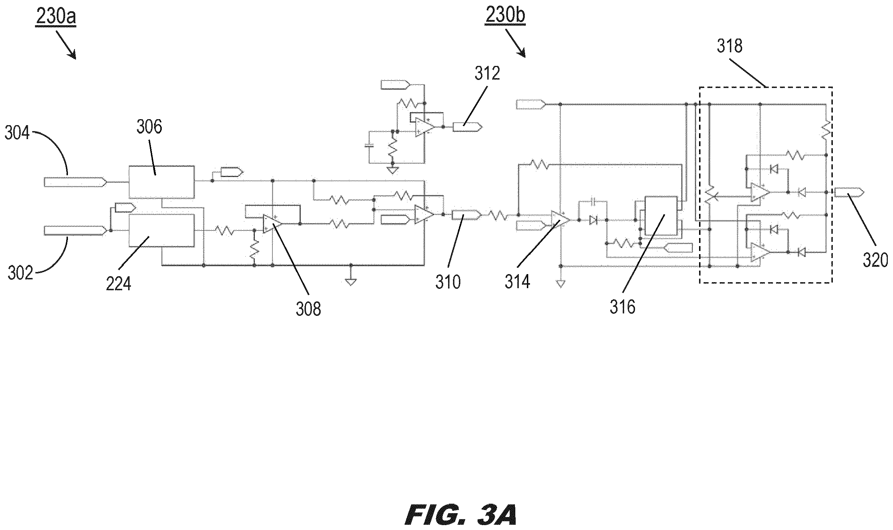

FIGS. 3A-D: OVERFLOW MITIGATION CIRCUIT DETAIL

Referring to FIGS. 3A through 3D, the overflow mitigation circuit 230 is shown.

In embodiments, the overflow mitigation circuit 230 may utilize signals from sensors within the beverage maker device (100, FIGS. 1-2C) as well as the pressure signal generated by the pressure transducer 224 to limit the volume of hot water dispensed by the beverage maker device to a predetermined threshold (e.g., 1.5 L, or the interior volume of the server (102, FIG. 1)) during a given catering cycle. For example, the overflow mitigation circuit 230 may allow cabin crew to utilize the beverage maker device 100 accounting for interruptions during the catering cycle. In some embodiments, the overflow mitigation circuit 230 may provide for low water level protection in the event of a shortage or fluctuation within an aircraft-based potable water supply.

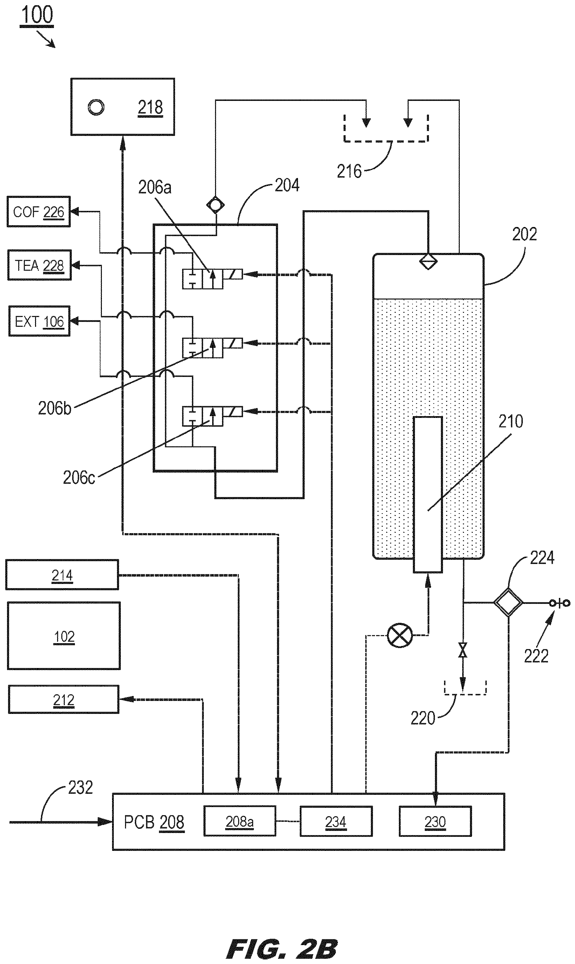

In embodiments, referring in particular to FIG. 3A, first and second stages 230a-b of the overflow mitigation circuit 230 may access a +5V power supply (302) to power digital electronics and the pressure transducer 224 and a +24V power supply (304) to power analog electronics (e.g., via a +18V linear regulator 306). For example, the voltage output of the pressure transducer 224 may be divided into a usable range, buffered (e.g., via amplifier 308), level shifted and inverted to generate a pressure voltage 310 corresponding to the flow pressure into the hot water tank (202, FIG. 2B) as well as a virtual ground reference 312 at half the supply voltage. The pressure voltage 310 may be further processed (e.g., via amplifier 314 and analog multiplier 316) and set through a precision limiter 318 that allows voltages below a threshold voltage to pass but maintains the output voltage 320 at the threshold voltage once the threshold voltage is reached.

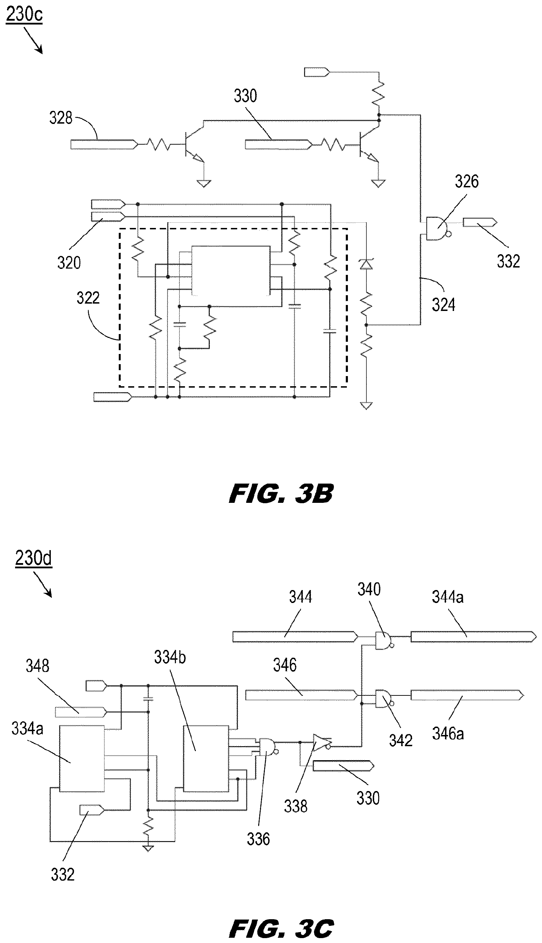

Referring also to FIG. 3B, a third stage 230c of the overflow mitigation circuit 230 is shown. In embodiments, within the third stage 230c the output voltage 320 is directly proportional to the velocity of the water flow, and may be utilized by the overflow mitigation circuit 230 as a control voltage to run a highly linear voltage-controlled oscillator 322 (VCO). The voltage output of the VCO 322 may be further processed into a complementary metal oxide semiconductor (CMOS) compatible signal 324. At AND gate 326, the CMOS compatible signal 324 may be gated by either a count-inhibit signal 328 or a dispense-limit signal 330 if either is active (resulting in CMOS-compatible output signal 332).

Referring also to FIG. 3C, a fourth stage 230d of the overflow mitigation circuit 230 is shown. In embodiments, within the fourth stage 230d the CMOS-compatible output signal 332 may be sent to cascaded counters 334a-b, which determine how many signal cycles of the VCO 322 constitute an allowable volume of water to dispense before activating gates 336, 338, which cease the dispensing of water by deactivating the signals to the solenoid valves (206a-b, FIG. 2A-C) controlling the water flow. For example, when the flow threshold is reached (as determined by the inputs to the gate 336) the output of the gate 336 is HIGH (e.g., dispense-limit signal 330) and the output of the gate 338 is LOW, feeding the gates 340, 342 (e.g., via respective coffee and tea solenoid input signals 344, 346) and deactivating the coffee solenoid output signal (344a; e.g., to solenoid valve 206a) and tea solenoid output signal (346a; e.g., to solenoid valve 206b).

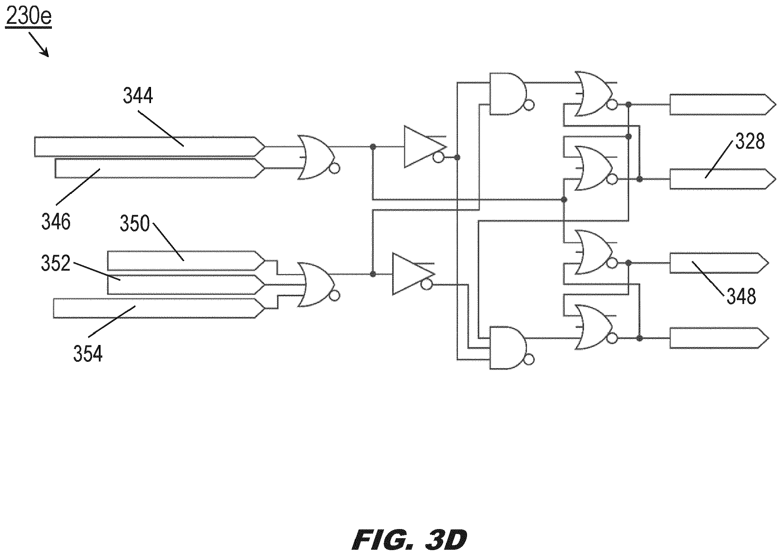

Referring also to FIG. 3D, a fifth and final stage 230e of the overflow mitigation circuit 230 is shown. In embodiments, within the fifth stage 230e digital components of the overflow mitigation circuit 230 may determine whether to activate the count-inhibit signal 328 and low-true count-reset signal 348. For example, the count-inhibit signal 328 may account for routine interruptions in service (based on, e.g., a handle-up signal 350, a low-water signal 352, and a pushbutton-in signal 354 (associated with the external faucet (106, FIG. 1))) that may require pausing the signal count by the cascaded counters 334a-b. Similarly, the count-reset signal 348 may be used when the beverage maker device 100 completes a catering cycle (e.g., brews a full pot of coffee or tea) to reset the counter values in the cascaded counters 334a-b for subsequent catering functions.

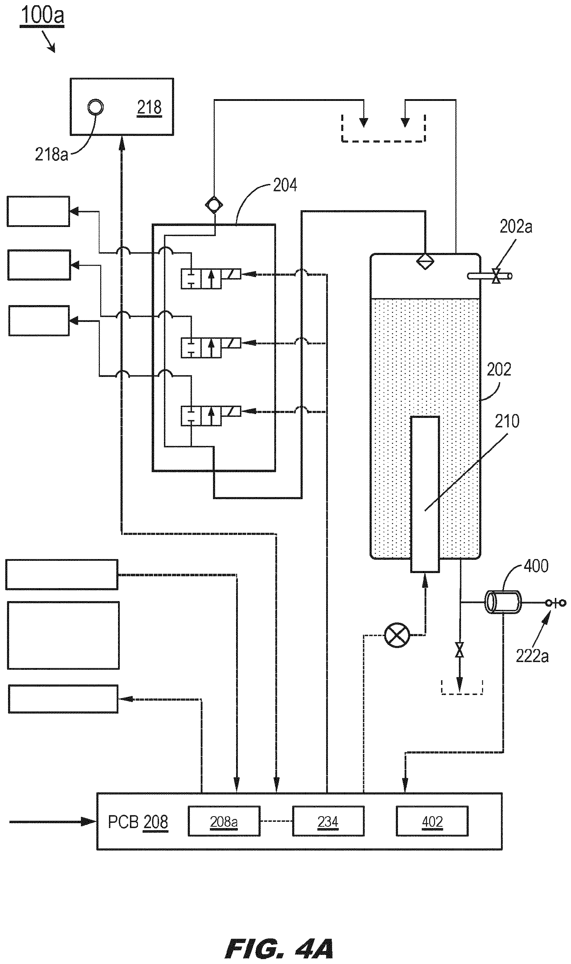

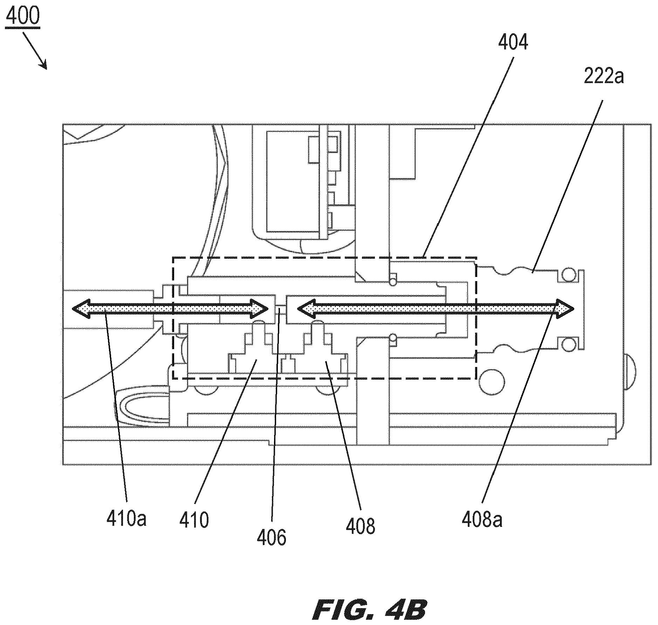

FIGS. 4A/B-DIFFERENTIAL PRESSURE FLOW METER

Referring to FIG. 4A, the beverage maker device 100a may be implemented and may function similarly to the beverage maker device 100 of FIGS. 1 through 3D, except that the beverage maker device 100a may incorporate a differential-pressure flow meter 400 plumbed into the water supply inlet and compatible with software stored to memory 234 and executed by the control processors 208a to signal the control circuitry 402 of the PCB 208.

Changes in water demand throughout an aircraft-based water system may, for example, lower water system pressure to such an extent that beverage maker devices, if the system pressure drops below their designed minimum operating pressure, may drain back into the water supply and enter a low-water protection mode. In embodiments, the differential-pressure flow meter 400 may sense the water pressure supplied to it as well as the flow of water entering and leaving the beverage maker device 100a.

In embodiments, referring also to FIG. 4B, the differential-pressure flow meter 400 may include an inlet body 404 plumbed between the water tank 202 and the inlet coupling 222a to the water supply. Within the inlet body 404, a restriction orifice 406 restricts the water flow to a predetermined diameter (e.g., 0.062 inch). On either side of the restriction orifice 406, a coupling-side pressure transducer 408 and a tank-side pressure transducer 410 sense, respectively, the supply flow pressure 408a and the tank-side flow pressure 410a as water flows into the beverage maker device. Based on the pressure drop between the supply flow pressure 408a and tank-side flow pressure 410a, or more generally the pressure differential between the supply flow pressure and tank-side flow pressure, the PCB 208 may determine a water flow rate.

By way of a non-limiting example, for respective inlet and outlet densities $\rho_1$ and $\rho_2$, restriction orifice diameter **d**, inlet diameter **D**, high pressure side $P_1$ (e.g., the higher of the supply flow pressure 408a and tank-side flow pressure 410a) and low pressure side $P_2$, a flow rate $Q_M$ may be determined via Bernoulli's equation

$$ Q_M = \left( \sqrt{\frac{1}{\left(\frac{\rho_1}{\rho_2}\right) - \beta^4}} \right) \left(\frac{\pi}{4}\right) (d^2) \left( \sqrt{2(P_1 - P_2)(\rho_1)} \right) $$

where $\beta = \dfrac{d}{D}$.

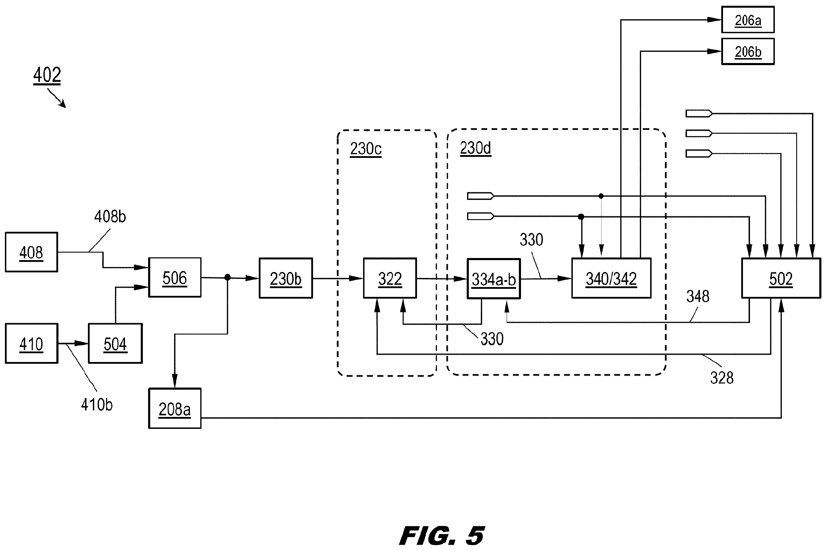

FIG. 5-DUAL PRESSURE CONTROL CIRCUITRY

Referring to FIG. 5, the control circuitry 402 is shown. The control circuitry 402 may include count inhibit/reset logic 502, count-inhibit signal 328, dispense-limit signal 330, and low-true count-reset signal.

In embodiments, the control circuitry 402 may be implemented and may operate similarly to the overflow mitigation circuit 230 (incorporating stages 230b-d) of FIGS. 2B through 3D, except that the control circuitry 402 may receive input signals 408b, 410b from the pressure transducers 408, 410 (e.g., indicating, respectively, the supply flow pressure (408a, FIG. 4B) and the tank-side flow pressure (410a, FIG. 4B)). For example, one of the input signals 410b may be inverted (504) before further processing (506; e.g., summing, scaling) with the other input signal 408b. The control processors 208a of the PCB (208, FIG. 4A) may determine a flow rate based on the processed input signals and signal the control circuitry (e.g., to disable the solenoids (206a-b, FIG. 4A) (e.g., via gates 340, 342) if the flow volume exceeds the flow threshold.

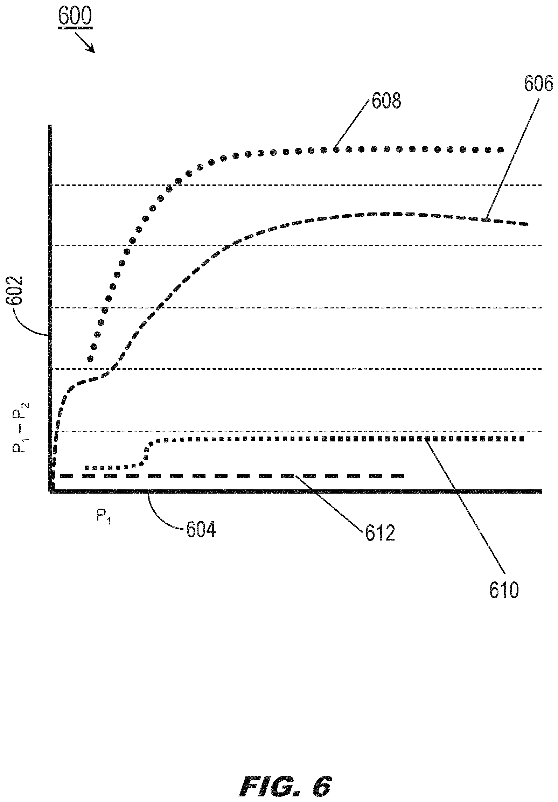

FIG. 6-FLOW RELATIONSHIPS

Referring also to FIG. 6, the PCB 208 may (e.g., additionally multiplying by a discharge coefficient to account for geometry losses) track flow pressure and flow rate over time, plotting performance relationships of flow pressure vs. flow rate during each individual catering cycle.

In embodiments, the plot (600) of differential pressure 602 (e.g., $P_1$ - $P_2$) versus high pressure 604 (e.g., $P_1$) may identify deviations in flow performance due to, e.g., scale buildup or variation in flow control washers. Based on identified deviations, the PCB (208, FIG. 4A) may alert cabin crew. For example, the plot 600 may identify nominal flow conditions (606) as well as, e.g., high flow alerts 608, low flow alerts 610, or a leakage condition 612 (e.g., if flow is detected into the beverage maker device (100a, FIG. 4A) when water is not being dispensed) resulting in negligible or zero tank-side flow pressure (410a, FIG. 4B). Similarly, the differential-pressure flow meter (400, FIG. 4A/B) may track water flowing from the hot water tank (202, FIG. 4A) back to the potable water supply due to pressure loss (e.g., where water flows through the restriction orifice (406, FIG. 4B) from left to right, as shown by FIG. 4B, and the coupling-side flow pressure (408a, FIG. 4B) is lower than the tank-side flow pressure 410a). Additionally, the differential-pressure flow meter 400, may determine whether the hot water tank (202, FIG. 4A) is filled with water before initiating a heating cycle (e.g., via the tank heaters 210, FIG. 4A). For example, air venting from the hot water tank 202 during system fill (e.g., via a venting valve (202a, FIG. 4A)) may greatly increase differential pressure 602 due to the lack of backpressure. In some embodiments, alert conditions detected by the PCB 208 may be reported to cabin crew and/or other users of the beverage maker device 100a, e.g., via visual alert lights (218a, FIG. 4A) or indicators incorporated into the HMI (218, FIG. 4A), or via alert messages sent to aircraft networks, e.g., to aircraft-wide system monitors. In some embodiments, based on the determined differential pressure, the PCB 208 may activate the venting valve 202a to release excess air from the water tank 202.

Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

**Claims**

1. A beverage maker device, comprising:

   a housing installable in an aircraft galley;
   a tank (202) configured to hold a volume of a fluid, the tank coupled to a fluid supply via an inlet coupling; and
   a manifold (204) disposed within the housing and including one or more solenoid valves (206) configured to control dispensing of the fluid from the tank through an outlet; and
   an inlet body (222) operatively coupled to the inlet coupling and to the tank, the inlet body comprising:

      a restriction orifice (406) configured to restrict a flow of the fluid;
      a tank-side pressure transducer (410) disposed between the restriction orifice and the tank, the tank-side pressure transducer configured to 1) sense at least one tank-side flow pressure associated with the flow of the fluid and 2) generate at least one tank-side flow signal corresponding to the tank-side flow pressure; and
      a coupling-side pressure transducer (408) disposed between the restriction orifice and the inlet coupling, the coupling-side pressure transducer configured to 1) sense at least one coupling-side flow pressure associated with the flow of the fluid and 2) generate at least one coupling-side flow signal corresponding to the coupling-side flow pressure;

      and
   a process control board, PCB, (208) disposed within the housing, the PCB comprising:

      at least one control processor;
      control circuitry (402) communicatively coupled to the control processor, to the solenoid valves, to the tank-side pressure transducer, and to the coupling-side pressure transducer, the control circuitry configured to:

         receive the at least one coupling-side flow signal and the at least one tank-side flow signal; and
         based on the coupling-side flow signal and the tank-side flow signal, determine at least one differential pressure associated with the flow of the fluid; and

      wherein the control circuitry is configured to direct the solenoid valves (206) to adjust the dispensing of the fluid based on the determined differential pressure.

2. The beverage maker device of claim 1, further comprising:

   at least one warning indicator in communication with the control circuitry;
   wherein the control circuitry is configured to:

      generate at least one alert signal corresponding to the determined differential pressure; and
      transmit the alert signal to the warning indicator;

   wherein the warning indicator is configured to generate at least one visible alert in response to the alert signal.

3. The beverage maker device of claim 2, wherein the at least one warning indicator includes a warning light (218a) set into the housing.

4. The beverage maker device of claim 2, wherein the at least one alert signal corresponds to at least one alert condition associated with the determined differential pressure.

5. The beverage maker device of claim 4, wherein the alert condition includes at least one of an abnormally high flow rate and an abnormally low flow rate.

6.  The beverage maker device of claim 4, wherein the alert condition is associated with at least one of:

    a volume of air within at least one of the tank and the inlet coupling;
    a leakage associated with the beverage maker device;
    a scale buildup within the tank;
    and
    a reverse flow of the fluid from the tank to the fluid supply.

7.  The beverage maker device of any preceding claim, further comprising:
    at least one memory (234) in communication with the PCB, the memory capable of storing encoded instructions associated with the solenoid valves, the encoded instructions executable by the control processor.

8.  The beverage maker device of claim 7, wherein the at least one memory is configured to store at least one of the tank-side flow pressure, the coupling-side flow pressure, the determined differential pressure, and a timestamp.

9.  The beverage maker device of any preceding claim, wherein:

    the tank includes at least one venting valve (202) in communication with the control circuitry, the venting valve configured to release a volume of air from the tank;
    and
    the control circuitry is configured to activate the at least one venting valve based on the determined differential pressure.


**Patentansprüche**

1.  Getränkebereitervorrichtung, umfassend:

    ein in einer Flugzeugbordküche installierbares Gehäuse;
    einen Tank (202), der dazu konfiguriert ist, ein Fluidvolumen aufzunehmen, wobei der Tank über eine Einlasskupplung an eine Fluidzufuhr gekoppelt ist; und
    einen Verteiler (204), der innerhalb des Gehäuses angeordnet ist und ein oder mehrere Magnetventile (206) beinhaltet, die dazu konfiguriert sind, die Abgabe der Fluids aus dem Tank durch einen Auslass zu steuern; und
    einen Einlasskörper (222), der an die Einlasskupplung und den Tank wirkgekoppelt ist, wobei der Einlasskörper Folgendes umfasst:

        eine Drosselöffnung (406), die dazu konfiguriert ist, einen Durchfluss des Fluids zu begrenzen;
        einen tankseitigen Druckwandler (410), der zwischen der Drosselöffnung und dem Tank angeordnet ist, wobei der tankseitige Druckwandler dazu konfiguriert ist, 1) mindestens einen tankseitigen Durchflussdruck, der dem Durchfluss des Fluids zugeordnet ist, zu erfassen und 2) mindestens ein tankseitiges Durchflusssignal, das dem tankseitigen Durchflussdruck entspricht, zu generieren;
        und
        einen kupplungsseitigen Druckwandler (408), der zwischen der Drosselöffnung und der Einlasskupplung angeordnet ist, wobei der kupplungsseitige Druckwandler dazu konfiguriert ist, 1) mindestens einen kupplungsseitigen Durchflussdruck, der dem Durchfluss des Fluids zugeordnet ist, zu erfassen und 2) mindestens ein kupplungsseitiges Durchflusssignal, das dem kupplungsseitigen Durchflussdruck entspricht, zu generieren;
        und
        eine Prozesssteuerplatine (process control board - PCB) (208), die innerhalb des Gehäuses angeordnet ist, wobei die PCB Folgendes umfasst:

            mindestens einen Steuerprozessor;
            eine Steuerschaltung (402), die kommunikativ an den Steuerprozessor, die Magnetventile, den tankseitigen Druckwandler und den kupplungsseitigen Druckwandler gekoppelt ist, wobei die Steuerschaltung zu Folgendem konfiguriert ist:

                Empfangen des mindestens einen kupplungsseitigen Durchflusssignals und des mindestens einen tankseitigen Durchflusssignals;

und

Bestimmen mindestens eines Differenzdrucks, der dem Durchfluss des Fluids zugeordnet ist, basierend auf dem kupplungsseitigen Durchflusssignal und dem tankseitigen Durchflusssignal; und wobei die Steuerschaltung dazu konfiguriert ist, die Magnetventile (206) anzuweisen, die Abgabe des Fluids basierend auf dem bestimmten Differenzdruck anzupassen.

**2.** Getränkebereitervorrichtung nach Anspruch 1, ferner umfassend:

mindestens eine Warnanzeige in Kommunikation mit der Steuerschaltung;
wobei die Steuerschaltung zu Folgendem konfiguriert ist:

Generieren mindestens eines Alarmsignals, das dem bestimmten Differenzdruck entspricht; und
Übertragen des Alarmsignals an die Warnanzeige;
wobei die Warnanzeige dazu konfiguriert ist, als Reaktion auf das Alarmsignal mindestens einen sichtbaren Alarm zu generieren.

**3.** Getränkebereitervorrichtung nach Anspruch 2, wobei die mindestens eine Warnanzeige eine in das Gehäuse eingesetzte Warnleuchte (218a) beinhaltet.

**4.** Getränkebereitervorrichtung nach Anspruch 2, wobei das mindestens eine Alarmsignal mindestens einer Alarmbedingung entspricht, die dem bestimmten Differenzdruck zugeordnet ist.

**5.** Getränkebereitervorrichtung nach Anspruch 4, wobei die Alarmbedingung mindestens eine von einer anormal hohen Durchflussrate und einer anormal niedrigen Durchflussrate beinhaltet.

**6.** Getränkebereitervorrichtung nach Anspruch 4, wobei die Warnbedingung mindestens einem von Folgendem zugeordnet ist:

einem Luftvolumen innerhalb mindestens eines von dem Tank und der Einlasskupplung;
einer Leckage, die der Getränkebereitervorrichtung zugeordnet ist;
einer Kalkablagerung innerhalb des Tanks;
und
einem Rückfluss des Fluids von dem Tank zu der Fluidzufuhr.

**7.** Getränkebereitervorrichtung nach einem der vorhergehenden Ansprüche, ferner umfassend:
mindestens einen Speicher (234) in Kommunikation mit der PCB, wobei der Speicher in der Lage ist, codierte Anweisungen, die den Magnetventilen zugeordnet sind, zu speichern, wobei die codierten Anweisungen durch den Steuerprozessor ausführbar sind.

**8.** Getränkebereitervorrichtung nach Anspruch 7, wobei der mindestens eine Speicher dazu konfiguriert ist, mindestens einen von dem tankseitigen Durchflussdruck, dem kupplungsseitigen Durchflussdruck, dem bestimmten Differenzdruck und einem Zeitstempel zu speichern.

**9.** Getränkebereitervorrichtung nach einem der vorhergehenden Ansprüche, wobei:

der Tank mindestens ein Entlüftungsventil (202) in Kommunikation mit der Steuerschaltung beinhaltet, wobei das Entlüftungsventil dazu konfiguriert ist, ein Luftvolumen aus dem Tank freizusetzen;
und
die Steuerschaltung dazu konfiguriert ist, das mindestens eine Entlüftungsventil basierend auf dem bestimmten Differenzdruck zu aktivieren.

**Revendications**

**1.** Appareil de préparation de boissons, comprenant :

un boîtier pouvant être installé dans une cuisine d'avion ;

un réservoir (202) configuré pour contenir un volume de fluide, le réservoir étant couplé à une alimentation en fluide par le biais d'un raccord d'entrée ; et

un collecteur (204) disposé à l'intérieur du boîtier et comprenant une ou plusieurs électrovannes (206) configurées pour commander la distribution du fluide à partir du réservoir par le biais d'une sortie ; et

un corps d'entrée (222) couplé fonctionnellement au raccord d'entrée et au réservoir, le corps d'entrée comprenant :

un orifice de restriction (406) configuré pour restreindre un débit du fluide ;

un transducteur de pression côté réservoir (410) disposé entre l'orifice de restriction et le réservoir, le transducteur de pression côté réservoir étant configuré pour 1) détecter au moins une pression de débit côté réservoir associée au débit du fluide et 2) générer au moins un signal de débit côté réservoir correspondant à la pression de débit côté réservoir ; et

un transducteur de pression côté couplage (408) disposé entre l'orifice de restriction et le couplage d'entrée, le transducteur de pression côté couplage étant configuré pour 1) détecter au moins une pression de débit côté couplage associée au débit du fluide et 2) générer au moins un signal de débit côté couplage correspondant à la pression de débit côté couplage ; et

une carte de commande de processus, PCB, (208) disposée à l'intérieur du boîtier, la PCB comprenant :

au moins un processeur de commande ;

des circuits de commande (402) couplés en communication au processeur de commande, aux électrovannes, au transducteur de pression côté réservoir et au transducteur de pression côté couplage, les circuits de commande étant configurés pour :

recevoir l'au moins un signal de débit côté couplage et l'au moins un signal de débit côté réservoir ; et

sur la base du signal de débit côté couplage et du signal de débit côté réservoir, déterminer au moins une pression différentielle associée au débit du fluide ; et

dans lequel les circuits de commande sont configurés pour diriger les électrovannes (206) pour ajuster la distribution du fluide sur la base de la pression différentielle déterminée.

2. Appareil de préparation de boissons selon la revendication 1, comprenant en outre :

au moins un indicateur d'avertissement en communication avec les circuits de commande ;
dans lequel les circuits de commande sont en outre configurés pour :

générer au moins un signal d'alerte correspondant à la pression différentielle déterminée ; et

transmettre le signal d'alerte à l'indicateur d'avertissement ;
dans lequel l'indicateur d'avertissement est configuré pour générer au moins une alerte visible en réponse au signal d'alerte.

3. Appareil de préparation de boissons selon la revendication 2, dans lequel l'au moins un indicateur d'avertissement comprend un voyant d'avertissement (218a) placé dans le boîtier.

4. Appareil de préparation de boissons selon la revendication 2, dans lequel l'au moins un signal d'alerte correspond à au moins une condition d'alerte associée à la pression différentielle déterminée.

5. Appareil de préparation de boissons selon la revendication 4, dans lequel la condition d'alerte comprend au moins l'un d'un débit anormalement élevé et d'un débit anormalement faible.

6. Appareil de préparation de boissons selon la revendication 4, dans lequel la condition d'alerte est associée à au moins l'un :

d'un volume d'air à l'intérieur d'au moins l'un du réservoir et/ou du raccord d'entrée ;
d'une fuite associée à l'appareil de préparation de boissons ;
d'une accumulation de tartre dans le réservoir ;

et

d'un débit inverse du fluide du réservoir vers l'alimentation en fluide.

7. Appareil de préparation de boissons selon une quelconque revendication précédente, comprenant en outre :
au moins une mémoire (234) en communication avec la PCB, la mémoire étant capable de stocker des instructions codées associées aux électrovannes, les instructions codées étant exécutables par le processeur de commande.

8. Appareil de préparation de boissons selon la revendication 7, dans lequel l'au moins une mémoire est configurée pour stocker au moins l'un de la pression de débit côté réservoir, de la pression de débit côté couplage, de la pression différentielle déterminée et d'un horodatage.

9. Appareil de préparation de boissons selon une quelconque revendication précédente, dans lequel :

le réservoir comporte au moins une soupape de ventilation (202) en communication avec les circuits de commande, la soupape de ventilation étant configurée pour libérer un volume d'air du réservoir ;
et
les circuits de commande sont configurés pour activer l'au moins une soupape de ventilation sur la base de la pression différentielle déterminée.

100

102

104

106

**FIG. 1**

**FIG. 2A**

**FIG. 2B**

**FIG. 2C**

230a

230b

304

302

306

224

308

312

310

314

316

318

320

*FIG. 3A*

230c

328  330

320

322

326

332

324

**FIG. 3B**

230d

344  340  344a

348  334b  346

334a  342  346a

332  336  338  330

**FIG. 3C**

230e

328

348

344

346

350

352

354

**FIG. 3D**

**FIG. 4A**

**FIG. 4B**

EP 3 861 895 B1

EP 3 861 895 B1

**FIG. 5**

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1759617 A
- US 2011061542 A

- US 2015013546 A